# EUROPEAN PATENT APPLICATION

(11) **EP 3 598 627 A1**
(43) Date of publication of application: **22.01.2020**
(21) Application number: 17900731.5
(22) Date of filing: 11.12.2017
(51) Int. Cl.: H02M 7/48, G01R 31/26, H02M 1/00

(54) **POWER CONVERSION DEVICE DIAGNOSIS CIRCUIT AND POWER CONVERSION DEVICE DIAGNOSIS SYSTEM**

(30) Priority: 15.03.2017 JP 2017049431
(71) Applicant: Hitachi, Ltd., Tokyo 100-8280 (JP)
(72) Inventor: OGAWA, Takashi, Tokyo, 100-8280 (JP); SAKURAI, Naoki, Tokyo, 100-8280 (JP); KOBAYASHI, Kiyotaka, Tokyo, 100-8280 (JP)
(74) Representative: Mewburn Ellis LLP
(86) International application number: PCT/JP2017/044333
(87) International publication number: WO 2018/168116

(57) **Abstract**

A diagnostic circuit for an electric power converter includes a noise current detecting unit 119 configured to detect a noise component superimposed on a DC power supply line of an electric power converter 10 including a plurality of electric power semiconductor elements 105 and configured to convert AC electric power or DC electric power into AC electric power having a variable frequency and a variable voltage, a pulse converting unit 111 configured to convert the noise component detected by the noise current detecting unit 119 into a pulse wave, and a time counting unit 112 configured to measure a time difference between a plurality of the pulse waves and a time difference between input control signals for the electric power semiconductor elements 105 and the pulse waves, wherein the pulse converting unit 111 generates pulse waves at a timing generated by pulses of the noise component.

## Description

### Technical field

The present invention relates to a diagnostic circuit for an electric power converter circuit and a diagnostic system for an electric power converter.

### Background Art

In a large-capacity electric power converter, a temperature rise in an Insulated Gate Bipolar Transistor (IGBT) device that constitutes the electric power converter may become a problem. An example technique for measuring the joint part temperature of an IGBT device is described in PTL 1.

Abstract of PTL 1 recites that "PROBLEM TO BE SOLVED: To provide a system for monitoring an operation state of an IGBT device in real time, especially a system for determining a joint part temperature of the IGBT device. SOLUTION: A system is equipped with: a differential unit 21 which receives characteristics of gate-emitter voltage of an IGBT device to be measured to distinguish the characteristics of the gate-emitter voltage in order to acquire pulses correlating to an edge formed by a mirror plateau stage in a switch off stage of the IGBT device; a timer unit 23 which measures a time delay between the acquired pulses showing the start and the end of the mirror plateau stage in the switch off stages of the IGBT device; and a joint part temperature calculation unit 25 which determines joint part temperature of the IGBT device on the basis of the measured time delay", disclosing a technique on a system for monitoring an operation state of an IGBT device in real time.

### Citation List

### Patent Literature

PTL 1: JP 2013-142704 A

### Summary of Invention

### Technical Problems

However, in the technique disclosed in PTL 1, it is necessary to detect the mirror plateau stage of the IGBT device. Therefore, there is a problem in that a measurement circuit with good high-speed and radiofrequency characteristics, i.e., an expensive measurement circuit is required.

In addition, in a device having N IGBTs, N measurement circuits are required, and there is a problem in that the circuit scale becomes large.

The present invention has been made in view of the above problems, and it is an object of the present invention to provide a diagnostic circuit for an electric power converter capable of estimating the element temperature of a semiconductor device constituting the electric power converter with a simple and inexpensive configuration.

### Solution to Problems

In order to solve the above-mentioned problems, the present invention has been constituted as follows.

That is, a diagnostic circuit for an electric power converter according to the present invention includes a noise current detecting unit configured to detect a noise component superimposed on a DC power supply line of an electric power converter including a plurality of electric power semiconductor elements and configured to convert AC electric power or DC electric power into AC electric power having a variable frequency and a variable voltage, a pulse converting unit configured to convert the noise component detected by the noise current detecting unit into a pulse wave, and a time counting unit configured to measure a time difference between a plurality of the pulse waves and a time difference between input control signals for the electric power semiconductor elements and the pulse waves, wherein the pulse converting unit generates pulse waves at a timing generated by pulses of the noise component.

Other means will be described in Description of Embodiments.

### Advantageous Effects of invention

According to the present invention, it is possible to provide a diagnostic circuit for an electric power converter capable of estimating the element temperature of a semiconductor device constituting the electric power converter with a simple and inexpensive configuration.

### Brief Description of Drawings

[FIG. 1] FIG. 1 is a block diagram for explaining an electric power conversion system related to a diagnostic circuit for an electric power converter according to a first embodiment of the present invention.
[FIG. 2] FIG. 2 is a diagram illustrating the circuit configuration of an electric power semiconductor element constituting the electric power converter according to the first embodiment of the present invention with symbols.
[FIG. 3] FIG. 3 is a diagram illustrating a cross section of an IGBT in an electric power semiconductor element constituting the electric power converter according to the first embodiment of the present invention.
[FIG. 4] FIG. 4 is a diagram illustrating temperature dependency of turn-off switching characteristics of electric power semiconductor elements constituting the electric power converter according to the first embodiment of the present invention, (a) illustrating a switching waveform at an element temperature T1 and (b) illustrating a switching waveform at an element temperature T2.
[FIG. 5] FIG. 5 is a diagram illustrating delay characteristics, with the element temperatures of the turn-off switching characteristics of the electric power semiconductor elements constituting the electric power converter according to the first embodiment of the present invention serving as parameters, (a) illustrating characteristics of a first positive pulse and (b) illustrating characteristics of a second positive pulse.
[FIG. 6] FIG. 6 is a diagram illustrating control signals, noise current waveforms, and output signal waveforms related to the electric power semiconductor elements constituting the electric power converter according to the first embodiment of the present invention, (a) being an enlarged view of turn-off portions of control signals, (b) being a waveform diagram of noise current detected by a noise current detector, and (c) being a waveform diagram of output signals of a pulse converting unit.
[FIG. 7] FIG. 7 is a flowchart illustrating a procedure from noise detection to analysis of the electric power semiconductor elements in the electric power conversion system according to the first embodiment of the present invention.
[FIG. 8] FIG. 8 is a block diagram for explaining an electric power conversion system related to a diagnostic circuit for an electric power converter according to a second embodiment of the present invention.
[FIG. 9] FIG. 9 is a diagram illustrating control signals, noise current waveforms, and output signal waveforms related to the electric power semiconductor elements constituting the electric power converter according to the second embodiment of the present invention, (a) being an enlarged view of turn-off portions of control signals, (b) being a waveform diagram detected by a noise current detector, and (c) being a waveform diagram of output signals of a pulse converting unit.
[FIG. 10] FIG. 10 is a flowchart illustrating a procedure from noise detection to analysis of the electric power semiconductor elements in the electric power conversion system according to the second embodiment of the present invention.
[FIG. 11] FIG. 11 is a diagram illustrating test results of an electric power cycle test of the electric power converter according to the second embodiment of the present invention.
[FIG. 12] FIG. 12 is a block diagram for explaining an electric power conversion system related to a diagnostic circuit for an electric power converter according to a third embodiment of the present invention.
[FIG. 13] FIG. 13 is a block diagram for explaining an electric power conversion system related to a diagnostic circuit for an electric power converter according to a fourth embodiment of the present invention.
[FIG. 14] FIG. 14 is a block diagram for explaining an electric power conversion system related to a diagnostic circuit for an electric power converter according to a fifth embodiment of the present invention.
[FIG. 15] FIG. 15 is a block diagram for explaining an electric power conversion system related to a diagnostic circuit for an electric power converter according to a sixth embodiment of the present invention.
[FIG. 16] FIG. 16 is a diagram for explaining a diagnostic system for an electric power converter according to a seventh embodiment of the present invention.

### Description of Embodiments

Hereinafter, modes for carrying out the present invention (hereinafter referred to as "embodiments") will be described with reference to the drawings as appropriate.

### <<First Embodiment>>

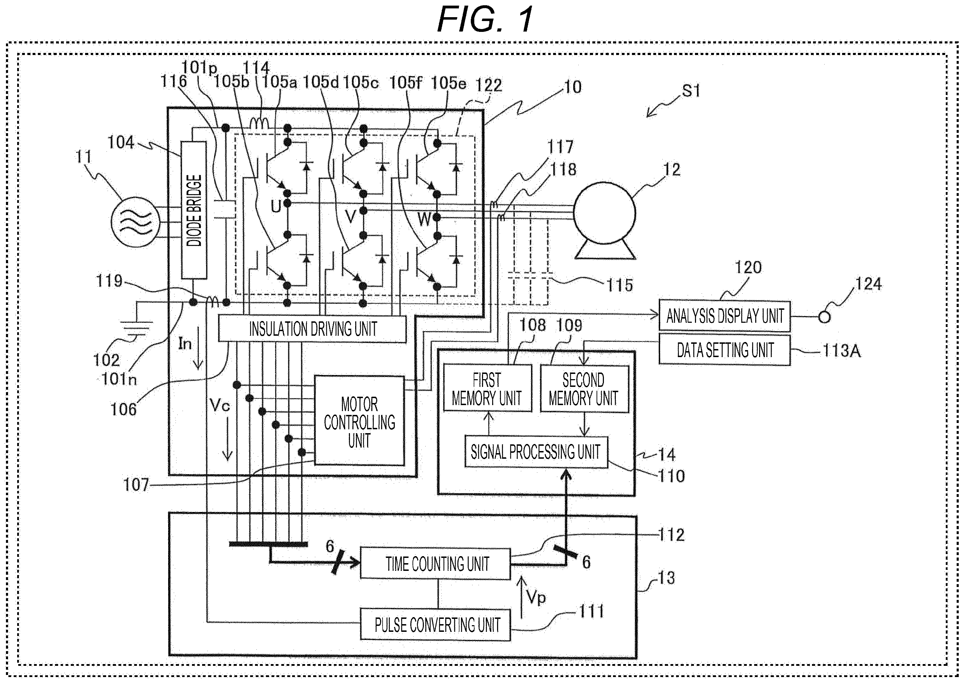

FIG. 1 is a block diagram for explaining an electric power conversion system S1 related to a diagnostic circuit for an electric power converter according to a first embodiment of the present invention.

### <Overview of electric power Conversion System S1>

In FIG. 1, the electric power conversion system S1 includes an electric power converter 10, a three-phase motor 12, a feature amount detecting unit 13, a feature amount analyzing unit 14, an analysis display unit 120, and a data setting unit 113A.

The electric power converter 10 receives three-phase AC electric power from the three-phase AC power supply 11 and temporarily converts it into DC electric power. Then, the electric power converter 10 converts the DC electric power again into three-phase AC electric power (voltage) having variable frequency and variable voltage and outputs it, and drives the three-phase motor 12.

Furthermore, the noise pulse of the semiconductor device generated in the electric power supply wiring of the electric power converter 10 is detected by the feature amount detecting unit 13 and is analyzed by the feature amount analyzing unit 14 to diagnose the element temperature of the semiconductor device in the electric power converter 10 and life prediction associated with the element temperature.

The diagnostic results of the electric power converter 10, such as the element temperature and the life prediction of the semiconductor device, are displayed on the analysis display unit 120.

The data setting unit 113A sets data necessary for predetermined processing and analysis in the feature amount analyzing unit 14.

Next, the configurations and functions of the devices and the units constituting the electric power conversion system S1 described above will be described in detail in order.

<<electric power Converter 10>>

The electric power converter 10 includes a diode bridge 104, a smoothing capacitor 116, an inverter 122, an insulation driving unit (insulation driving circuit) 106, a motor controlling unit 107, and a noise current detecting unit (noise current detector) 119.

The diode bridge 104 is composed of three sets of diode bridges. The u-phase, the v-phase, and the w-phase of the three-phase AC power supply 11 are input between the AC input terminals of the three sets of diode bridges.

The voltage (electric power) obtained by rectifying each phase (u-phase, v-phase, w-phase) of the three-phase AC in the three sets of diode bridges is output between a DC power supply line for positive polarity 101p and a DC power supply line for negative polarity 101n.

The smoothing capacitor 116 is connected between the DC power supply line for positive polarity 101p and the DC power supply line for negative polarity 101n, and smooths the voltage on which the pulsating current output from the three-phase diode bridge 104 appears to generate DC voltage (electric power). Furthermore, the smoothing capacitor 116 suppresses DC voltage fluctuation at the time of switching of the inverter 122.

The noise current detector 119 is provided on the DC power supply line for negative polarity 101n between the diode bridge 104 and the smoothing capacitor 116. The noise current detector 119 detects the noise current on the DC power supply line for negative polarity 101n between the diode bridge 104 and the smoothing capacitor 116.

Also, the DC power supply line 101n for negative polarity is connected (grounded) to a ground (earth) 102.

The inverter 122 includes a plurality of electric power semiconductor elements 105 (105a to 105f). In FIG. 1, the reference numeral of the electric power semiconductor elements 105 is not illustrated, but any or all of the electric power semiconductor elements 105a to 105 are represented as the electric power semiconductor element 105 as appropriate.

In the inverter 122, the electric power semiconductor element 105a and the electric power semiconductor element 105b are connected in series to form a U-phase leg. Similarly, the electric power semiconductor element 105c and the electric power semiconductor element 105d are connected in series to form a V-phase leg, and the electric power semiconductor element 105e and the electric power semiconductor element 105f are connected in series to form a W-phase leg.

The series circuits forming the U-phase, V-phase, and W-phase legs are each connected between the DC power supply line for positive polarity and the DC power supply line 101n for negative polarity.

The connection points of the electric power semiconductor element connected to the DC power supply line for positive polarity side of and the electric power semiconductor element connected to the DC power supply line 101n for negative polarity of the U-phase, V-phase, and W-phase legs serve as U-phase, V-phase, and W-phase output terminals, respectively.

The electric power semiconductor elements 105a to 105f of the inverter 122 are integrally controlled so that three-phase AC having variable frequency and variable voltage is output from the output terminals of the U-phase, V-phase, and W-phase by the motor controlling unit 107 and the insulation driving unit 106 described later.

The three-phase motor 12 is driven by the U-phase, V-phase, and W-phase three-phase AC voltages (electric power) output from the inverter 122, that is, from the electric power converter 10.

The voltage and frequency of the u-phase, v-phase, and w-phase of the three-phase AC power supply 11 are different from those of the U-phase, V-phase, and W-phase of the output from the inverter 122.

Each of the plurality of electric power semiconductor elements 105a to 105f constituting the inverter 122 has a parasitic diode connected in anti-parallel or an antiparallel diode applied in anti-parallel.

The DC power supply line for positive polarity has parasitic inductance as a distributed constant. This parasitic inductance is represented in FIG. 1 as parasitic inductance 114. Although the DC power supply line 101n for negative polarity also has parasitic inductance, it is omitted in FIG. 1.

In addition, parasitic capacitance 115 is present in the U-phase, V-phase, and W-phase three-phase AC wiring, which is the output from the inverter 122 driving the three-phase motor 12.

The insulation driving unit (insulation driving circuit, driving circuit) 106 has a function of driving the electric power semiconductor elements 105 (105a to 105f) while insulating the electric power semiconductor elements 105 (105a to 105f) from the motor controlling unit 107. The insulation driving unit 106, which is placed outside the dashed-line frame for the inverter 122 in FIG. 1, can also be viewed as a part of the inverter 122.

The motor controlling unit 107 refers to information detected by phase current detectors 117 and 118 provided at the output terminals of the U-phase, V-phase, and W-phase three-phase AC electric power of the inverter 122 driving the three-phase motor 12. Then, the motor controlling unit 107 controls the inverter 122 via the insulation driving unit 106. That is, the electric power semiconductor elements 105 (105a to 105f) are integrally controlled.

The inverter 122 performs PWM (Pulse Width Modulation) on a DC voltage obtained by rectifying the three-phase AC power supply 11 together with the motor controlling unit 107 and the insulation driving unit 106 to generate an AC voltage, and controls the rotation speed and torque of the three-phase motor 12.

Furthermore, from the electric power converter 10, information (In) on the noise current detected by the noise current detector (noise current detecting unit) 119 and information (Vc) on control signals (six signal lines) of the motor controlling unit 107 are sent to the feature amount detecting unit 13.

### <<Feature Amount Detecting Unit 13>>

The feature amount detecting unit 13 includes a pulse converting unit 111 and a time counting unit 112.

The pulse converting unit 111 detects a pulse related to the noise of the inverter 122 from the information on the noise current detected by the noise current detector 119.

The time counting unit 112 measures the time related to the noise pulse on the basis of the information on the control signals (Vc) of the motor controlling unit 107 and output signals (Vp) of the pulse converting unit 111.

The counting information on the time related to the noise pulse obtained by the time counting unit 112 is sent to the feature amount analyzing unit 14 (six signal lines).

Specific and detailed functions of the pulse converting unit 111 and the time counting unit 112 will be described later.

### <<Feature Amount Analyzing Unit 14>>

The feature amount analyzing unit 14 includes a signal processing unit 110, a first memory unit 108, and a second memory unit 109.

The signal processing unit 110 receives output signals from the time counting unit 112 and performs signal processing. The signal processing unit 110 performs signal processing based on predetermined data stored in the second memory unit 109. The data processed by the signal processing unit 110 is sent to the first memory unit 108. The processed data is temporarily stored in the first memory unit 108 and sent to the analysis display unit 120.

Furthermore, as described later, since the second memory unit 109 stores the relationship between the time difference of noise pulses (pulse waves) generated by the electric power semiconductor elements (IGBT) 105 and the element temperature of the electric power semiconductor elements, the second memory unit 109 may be referred to as a "relation storage unit". The second memory unit 109 and the first memory unit 108 may be collectively referred to as a "relation storage unit".

Specific and detailed functions of the signal processing unit 110, the first memory unit 108, and the second memory unit 109 will be described later.

### <<Analysis Display Unit 120>>

The analysis display unit 120 has an analysis function and a display function. Then, the analysis display unit 120 displays the data stored in the first memory unit 108 described above (processing results of the signal processing unit 110 and the like).

In addition to the display of the data stored in the first memory unit 108, the analysis display unit 120 also has a function of analyzing the information on the processing results of the signal processing unit 110 and displaying the analysis results.

### <<Data Setting Unit 113A>>

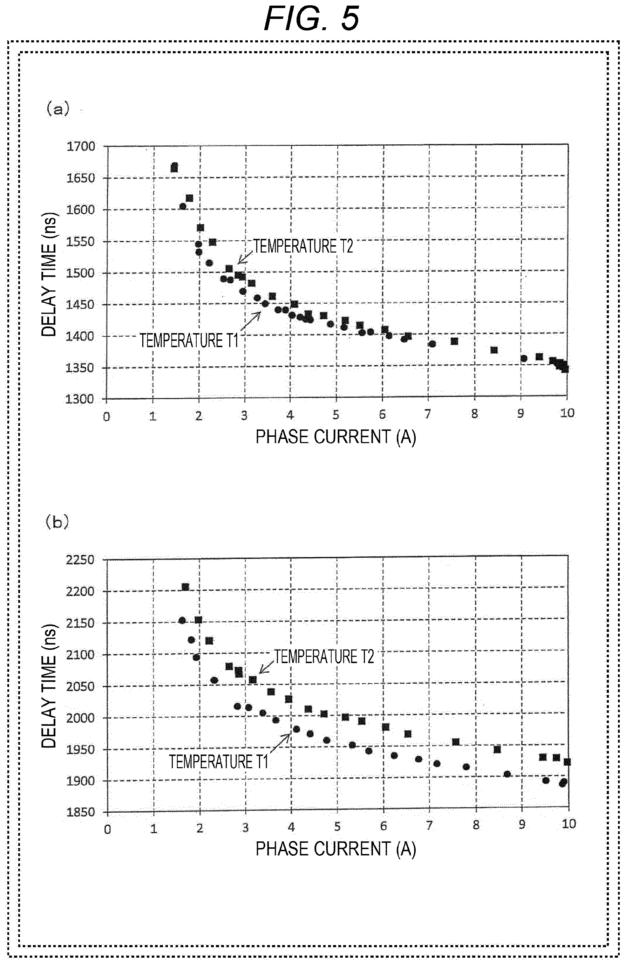

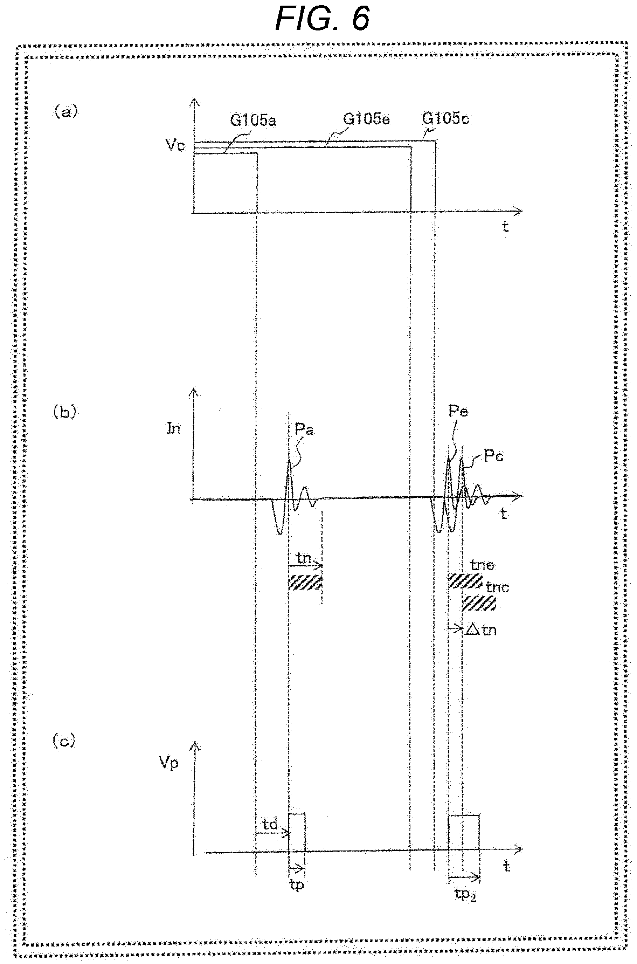

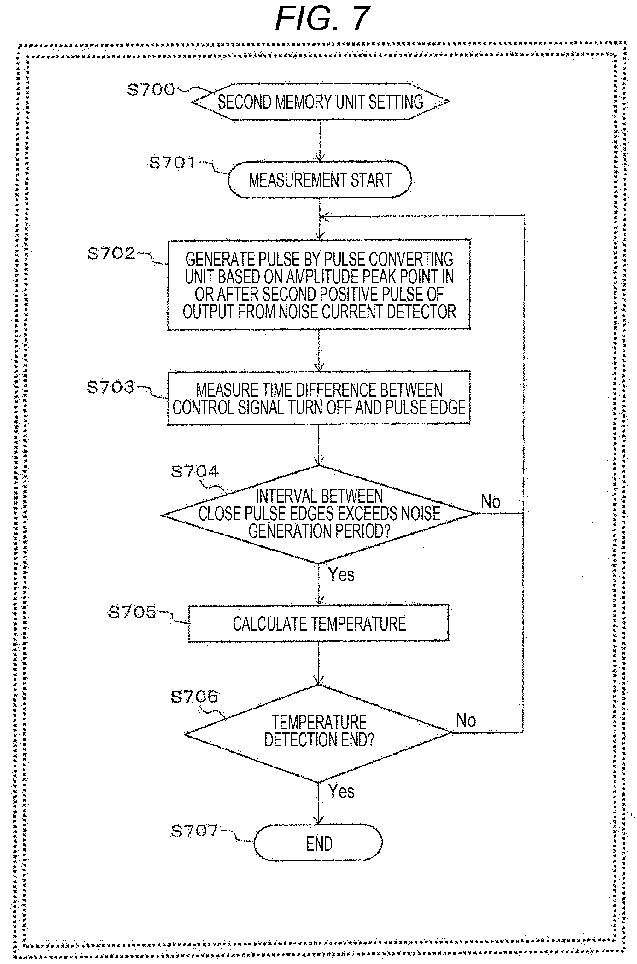

The data setting unit 113A has predetermined data necessary for the feature amount analyzing unit 14 to perform predetermined processing and analysis. Examples of the predetermined data include an algorithm of a flowchart in FIG. 7 described later, temperature dependency information on IGBT noise in FIG. 5, noise generation period information in FIG. 6, time-temperature information on pulses, and the like.

The predetermined data of the data setting unit 113A are set in the second memory unit 109 of the feature amount analyzing unit 14.

The data setting unit 113A may use an external medium such as a USB memory.

### <Temperature Rise in Electric Power Semiconductor Elements and Deterioration of electric power Converter>

The diagnostic circuit of the electric power converter according to the first embodiment of the present invention performs life prediction of the electric power converter 10 due to the temperature rise (temperature change) of the electric power semiconductor elements 105 of the electric power converter 10 and the degradation of the devices associated with the temperature rise. In this temperature rise and life prediction, grasping the states of the electric power semiconductor elements 105 involves some problem, and the electric power semiconductor elements 105 will be described in detail next.

### <<Electric Power Semiconductor Elements 105>>

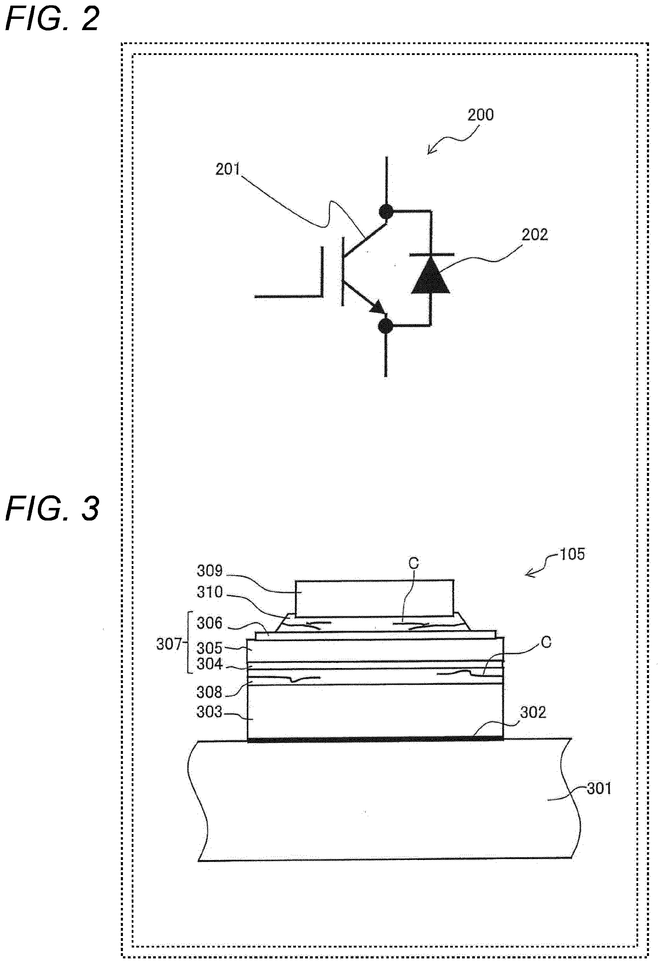

The electric power semiconductor elements 105 (105a to 105f) constituting the inverter 122 will be described in detail with reference to FIG. 2 and FIG. 3.

FIG. 2 is a diagram illustrating the circuit configuration (electric power semiconductor circuit 200) of each of the electric power semiconductor elements 105 constituting the electric power converter 10 according to the first embodiment of the present invention with symbols.

As illustrated in FIG. 2, the electric power semiconductor circuit 200 (electric power semiconductor element 105) includes an IGBT 201 and a diode 202 connected in parallel in the reverse direction between the emitter terminal and the collector terminal of the IGBT 201. Since the electric power semiconductor circuit 200 including the IGBT illustrated in FIG. 2 is generally well known, the detailed description will be omitted.

The IGBT 201 may be replaced with a MOSFET (Metal-Oxide-Semiconductor Field-Effect Transistor). In a case where a parasitic diode of a MOSFET can be applied in place of the diode 202, the diode 202 may be omitted.

FIG. 3 is a diagram illustrating a cross section of the electric power semiconductor element 105 (IGBT 201: FIG. 2) constituting the electric power converter 10 according to the first embodiment of the present invention.

The electric power semiconductor element 105 includes a semiconductor element unit 309, a solder layer 310, an insulating substrate 307, a solder layer 308, and a base board 303.

Cleavages (cracks) C may occur in the solder layers 308 and 310.

Furthermore, the insulating substrate 307 includes a metal layer 306, an insulating layer 305, and a metal layer 304.

The base board 303 abuts on the cooler 301, and grease 302 is applied to the abutting surface. The grease 302 improves heat conduction.

As described above, FIG. 3 illustrates the electric power semiconductor element 105 including the semiconductor element unit 309 as a component thereof.

In FIG. 3, only one semiconductor element unit 309 is illustrated for one electric power semiconductor element 105. However, one electric power semiconductor element 105 may be formed by using a plurality of semiconductor element units 309.

For example, in a semiconductor module applied to high-electric power applications with output electric power in megawatts, the semiconductor element units 309 are generally mounted in multiple parallels and used as one electric power semiconductor element 105.

During operation of the electric power conversion system S1 (FIG. 1), heat generated in the semiconductor element unit 309 in FIG. 3 is transmitted to the insulating substrate 307, the base board 303, the grease 302, and the cooler 301 through the solder layer 310.

During operation of the electric power conversion system S1 (FIG. 1), the temperature of the electric power semiconductor element 105 and of the semiconductor element unit 309 in the electric power semiconductor element 105 may become abnormally high due to due to exhaustion of the grease 302, failure of the cooler 301, abnormal operation or failure of the motor controlling unit 107 (FIG. 1), or the like.

When the temperature of the semiconductor element unit 309 becomes abnormally high, cracks C, peeling, and the like occur in the solder layers 308 and 310 due to thermal fatigue in temperature cycles. When such a situation occurs, the thermal resistance in the solder layers 308 and 310 becomes high, whereby the cracks C, peeling, and the like grow to cause accumulated deterioration.

As a result, the channel resistance of the semiconductor element unit 309 is finally burned out and the electric power semiconductor element 105 breaks down.

Therefore, it is desirable to detect an abnormality before failure by monitoring the temperatures of the electric power semiconductor element 105 and the semiconductor element unit 309. In order to make temperature detection highly accurate, it is desirable to measure the surface temperature of the semiconductor element unit 309.

Even if the temperature of the back surface of the electric power semiconductor element 105 or the base board 303 is measured, it is difficult to measure an accurate temperature change in the semiconductor element unit 309 because the respective thermal time constants are added.

### <Temperature Dependency of Switching Noise of Electric Power Semiconductor Element 105>

As described above, it is difficult to measure temperature changes in the electric power semiconductor element 105 and the semiconductor element unit 309 in the electric power converter 10.

Furthermore, since the electric power converter 10 used at a high voltage involves a problem of withstand voltage, it is not practical to measure the temperature of or temperature changes in the electric power semiconductor element 105 and the semiconductor element unit 309 with a thermometer.

Next, a method of capturing a temperature change in the electric power semiconductor element 105 by measuring switching noise accompanying the switching operation of the electric power semiconductor element 105 will be described.

This switching noise will be described with reference to FIG. 1.

In FIG. 1, as described above, the inverter 122 is a three-phase inverter. The electric power semiconductor element 105a and the electric power semiconductor element 105b are connected in series, and a DC voltage is applied to both ends of this series circuit. The connection point between the electric power semiconductor element 105a and the electric power semiconductor element 105b is connected to the three-phase motor 12. Similarly, a DC voltage is similarly applied to the other electric power semiconductor elements 105c and 105d and electric power semiconductor elements 105e and 105f, and the three-phase motor 12 is connected to the intermediate connection points of the respective series circuits.

The electric power semiconductor element 105 performs switching operation to supply electric power to the three-phase motor 12. In this process, since the parasitic inductance 114 of the wiring and the parasitic capacitance 115 between the wiring connecting the electric power semiconductor element 105 and the three-phase motor 12 and the wiring nearby are present, noise is generated when the electric power semiconductor element 105 performs switching. Then, the noise current detector 119 detects the current of the DC power supply line 101n on which this switching noise (noise component) is superimposed.

The switching noise is generated at the turn-off and turn-on timings of the electric power semiconductor element 105, and the generation timing particularly at the turn-off has temperature dependency as described later.

### <Temperature Dependency of Turn-off Switching Characteristics of Electric Power Semiconductor Element>

The temperature dependency of the turn-off switching characteristics of the electric power semiconductor element 105 will be described.

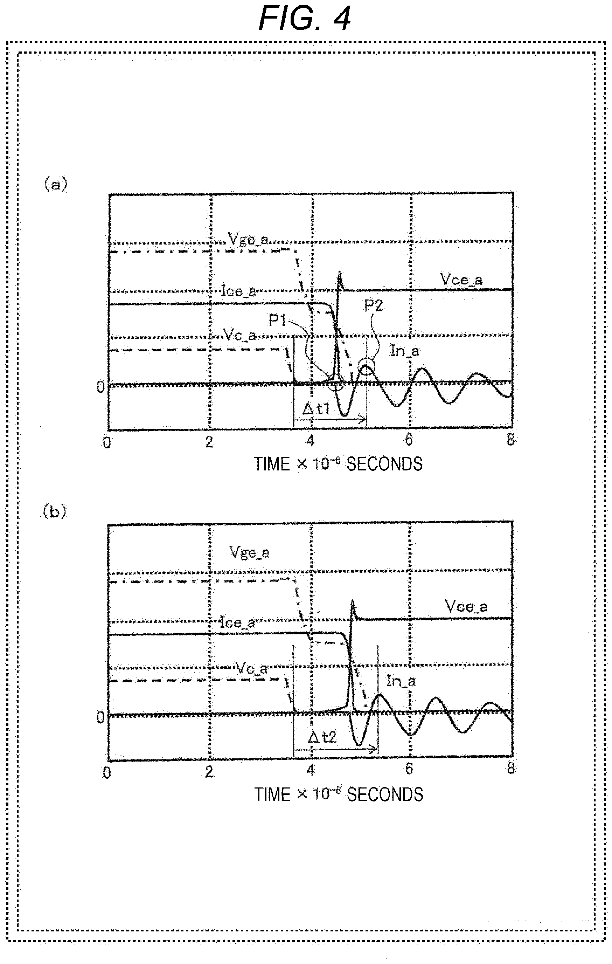

FIG. 4 is a diagram illustrating the temperature dependency of the turn-off switching characteristics of the electric power semiconductor elements 105 constituting the electric power converter 10 according to the first embodiment of the present invention, (a) illustrating a switching waveform at an element temperature T1 and (b) illustrating a switching waveform at an element temperature T2 higher than the element temperature T1.

In FIGS. 4(a) and 4(b), the horizontal axis represents time (transition of time), and the vertical axis represents the relative magnitude of voltage and current. Furthermore, a gate-emitter voltage (Vge_a), a collector-emitter voltage (Vce_a), and a current flowing from the collector to the emitter (Ice_a) of the IGBT (electric power semiconductor element) 105a when the electric power semiconductor element 105a is turned off, and a command signal Vc_a of the IGBT (electric power semiconductor element) 105a are illustrated.

Although Vge_a is also turned off based on the turn-off of Vc_a, a step-like waveform is obtained because of a discharge period of the mirror capacitance. When Vge_a falls below the threshold voltage, the current rapidly decreases and Vce_a rises.

At this time, switching noise illustrated by a characteristic line In-a is generated by the parasitic inductance 114 and the parasitic capacitance 115.

Comparing FIG. 4(a) and FIG. 4(b), the delay time from the turn-off of Vc_a to the generation of noise changes from Δt1 to Δt2 depending on the element temperatures T1 and T2.

The change in the delay time is mainly due to the temperature dependency of the discharge time of the mirror capacitance of the electric power semiconductor element (power semiconductor element) 105a. Therefore, delays depending on the element temperatures are observed in Vge_a, Ice-a, and Vce_a.

Since these voltages and currents are generated in the high voltage part of the electric power converter 10, an insulation circuit and a detection circuit are required for each electric power semiconductor element, and six of these are required in the three-phase inverter.

Therefore, when their voltages and currents are separately measured, the number of measuring devices increases, and it is difficult to reduce the size and weight of the electric power converter 10.

On the other hand, if the noise current detector 119 (FIG. 1) measures the noise of the electric power semiconductor elements 105a to 105f (FIG. 1), six switching noises of the electric power semiconductor elements 105a to 105f can be detected with this single noise current detector. Therefore, the size and weight of the electric power converter 10 can be reduced.

### <Relationship between Noise Pulse Position and Sensitivity of Element Temperature and Delay Time>

In the switching noises detected by the noise current detector 119, as illustrated by the characteristic line In-a of the noise current in FIGS. 4(a) and 4(b), a plurality of small pulses are generated and become gradually larger, and then gradually attenuate to have a peak value.

In FIG. 4(a), a first pulse (having positive polarity) is generated at a portion indicated by a region P1, and a second pulse is generated at a portion indicated by a region P2. The first positive pulse at the portion indicated by the region P1 is not clearly displayed in FIG. 4(a) due to a small amplitude. The same applies to FIG. 4 (b) .

As described above, since the switching noise pulses oscillate a plurality of times, the sensitivity of the element temperature and the delay time differs depending on where the time is measured.

FIG. 5 is a diagram illustrating delay characteristics, with the element temperatures of the turn-off switching characteristics of the electric power semiconductor elements 105 constituting the electric power converter 10 according to the first embodiment of the present invention serving as parameters, (a) illustrating characteristics of a first positive pulse and (b) illustrating characteristics of a second positive pulse.

In FIGS. 5(a) and 5(b), the vertical axis represents the delay time (ns), and the horizontal axis represents the turn-off current (Ice_a), which is a phase current (A) of the electric power semiconductor element 105a. The element temperature T1 and the element temperature T2 are used as parameters, and although T1 and T2 change, experiments were conducted so as to keep the temperature difference (T2-T1) between T2 and T1 at a constant value of 57 degrees. The delay time is based on the turn-off of the control signal Vc_a.

In FIGS. 5(a) and 5(b), the temperature T1 and the temperature T2 are illustrated, which mean the element temperature T1 and the element temperature T2, respectively.

Furthermore, as described above, FIG. 5(a) illustrates the characteristics of the first positive pulse (having positive polarity) whereas FIG. 5(b) illustrates the characteristics of the second positive pulse, so that different ranges are illustrated for the range of delay time in FIG. 5(a) and the range of delay time in FIG. 5(b).

FIG. 5(a) illustrates the results of measuring the delay time at the first positive pulse as described above. The element temperature difference between T2 and T1 was 57 degrees, and the delay time was about 10-20 ns at maximum.

FIG. 5(b) illustrates the results of measuring the delay time of the second positive pulse as described above. The element temperature difference between T2 and T1 was 57 degrees, and the delay time was about 40 ns.

There is also an influence by the dynamic range of the current detector. Therefore, if the current is less than 2 amperes, the noise current also becomes small, and it is difficult to determine the delay time. However, in FIG. 5(b), the delay time is approximately constant at about 40 ns between 2 amperes and 8.5 amperes.

In addition, the first positive pulse in FIG. 5(a) has a small amplitude and is susceptible to switching noise generated by another control signal, so that the amplitude is not stable.

The second positive pulse in FIG. 5(b) is stable with the maximum amplitude value.

All things considered, in measuring time, it is desirable to determine the current range to be measured by the phase current detectors 117 and 118 in FIG. 1, and perform the measuring at a portion where the maximum amplitude is generated in or after the second positive pulse of the switching noise within the range.

### <Detection of Feature Amount of Switching Noise Pulse>

As illustrated in FIG. 1, detection of the feature amount of the switching noise pulse generated in the electric power semiconductor element 105 is performed by the feature amount detecting unit 13.

As described above, the feature amount detecting unit 13 includes the time counting unit 112 and the pulse converting unit 111.

As described above, the pulse converting unit 111 converts the noise information (In) on the six electric power semiconductor elements 105a to 105f on the DC power supply line 101n for negative polarity detected by the noise current detector 119 of the electric power converter 10 into pulses.

The time counting unit 112 receives the control signals (Vc), for the electric power semiconductor elements 105a to 105f, of the motor controlling unit 107 and the serial data (Vp) of pulses, having noise information on the six electric power semiconductor elements 105a to 105f, of the pulse converting unit 111.

Then, the time counting unit 112 measures signals from the pulse converting unit 111, using the control signals (Vc) from the motor controlling unit 107 as a trigger. Then, the electric power semiconductor element serving as a noise generation source is specified.

FIG. 6 is a diagram illustrating control signals, noise current waveforms, and output signal waveforms related to the electric power semiconductor elements 105 constituting the electric power converter 10 according to the first embodiment of the present invention, (a) being an enlarged view of turn-off portions of control signals (Vc), (b) being a waveform diagram of the noise current (In) detected by the noise current detector 119, and (c) being a waveform diagram of the output signals (Vp) of the pulse converting unit 111.

In FIGS. 6(a), 6(b), and 6(c), the horizontal axis represents time (transition of time), and the vertical axes respectively represents control signal (Vc) voltage, noise current In, and output signal voltage Vp.

Furthermore, control signals for the respective gates of the electric power semiconductor elements 105a, 105c, and 105e are denoted as G105a, G105c, and G105e.

Regarding the control signals G105a, G105c, and G105e in FIG. 6(a), since their signal representations overlap in high potentials (positive potentials), so they are intentionally shifted in the vertical direction to distinguish them.

Furthermore, as described above, the vertical axis in FIG. 6(a) represents Vc and the control signals for the gates are denoted as G105a, G105c, and G105e, but these are used for convenience to represent timing on the time axis. That is, in FIG. 1, the six control signals sent from the motor controlling unit 107 to the time counting unit 112 are denoted as Vc. As described above, control signals for the respective gates of the electric power semiconductor elements 105a, 105c, and 105e are denoted as G105a, G105c, and G105e. However, since the control signal Vc and the control signals G105a, G105c, and G105e have different voltages, they are denoted differently.

When the control signal G105a in FIG. 6(a) changes from high potential (positive potential) to low potential (negative potential), that is, when the electric power semiconductor element 105a is turned off, the noise current In is detected by the noise current detector 119 and a pulse with its peak indicated as Pa in FIG. 6(b) is generated.

Regarding the noise current In, the time until the pulses of the noise current In converge with reference to the second positive pulse Pa is defined as a noise generation period tn. The first positive pulse of the noise current In is not illustrated in FIG. 6(b) because it is small as described above.

After the second positive pulse Pa is detected, the pulse converting unit 111 generates a pulse having a predetermined pulse width tp (FIG. 6(c)). The pulse width tp of the pulse generated by the pulse converting unit 111 is desirably shorter than the noise generation period tn.

A time since the control signal G105a changed from high potential to low potential until the rising of a pulse (pulse width tp) generated by the pulse converting unit 111 is measured as a delay time td.

When the control signal G105e in FIG. 6(a) changes from high potential to low potential, that is, when the electric power semiconductor element 105e is turned off, a pulse indicated as Pe is generated in the noise current In and detected by the noise current detector 119 (FIG. 6(b)).

Furthermore, when the control signal G105c in FIG. 6(a) changes from high potential to low potential, that is, when the electric power semiconductor element 105c is turned off, a pulse indicated as Pc is generated in the noise current In and detected by the noise current detector 119 (FIG. 6(b)).

If the time interval between the change from the high potential to the low potential of the control signal G105e and the change from the high potential to the low potential of the control signal G105c is short, as illustrated in FIG. 6(b), the pulse Pe corresponding to the change in the control signal G105e and the pulse Pc corresponding to the change in the control signal G105c overlap at their foot regions. If the pulse Pe and the pulse Pc overlap in this manner, as illustrated in FIG. 6(c), a pulse having a pulse width tp₂ larger than the pulse width tp is generated as an output signal of the pulse converting unit 111.

If the pulse Pe and the pulse Pc overlap at their foot regions, it is considered unsuitable for measuring a desired delay time.

Specifically, the noise generation period tn of switching noises is evaluated in advance. Then, for example, if the interval Δtn between two Vp signals (tne and tnc) caused by the pulse Pe and the pulse Pc is within the noise generation period tn, the measurement result in this case is discarded assuming that the switching noises overlap.

Assuming that the switching noises overlap in this manner, there is a possibility that the pulse from which the measurement result is discarded is an important pulse from the viewpoint of grasping a temperature rise in the electric power semiconductor elements 105. However, since the electric power semiconductor element 105 of the pulse from which the measurement result is discarded in this way is repeatedly measured, there is another measurement timing that leads to no overlap with the switching noises of the other electric power semiconductor elements 105. Therefore, measurement is possible at the other timing. Therefore, even if the two switching noises overlap and the measurement result may be discarded, it is possible to grasp a temperature rise in the electric power semiconductor elements 105 constituting the electric power converter 10.

If the interval between the control signals is outside the noise generation period, it is possible to measure the noise generation period and specify the IGBT serving as the noise generation source, and thus to measure the delay time.

The noise generation period tn is a time from the time serving as a reference for pulse generation to the time when the pulses of the noise converge. The reference time of this pulse generation is, for example, the time when the peak of the magnitude of the second positive pulse is reached, as described above. Alternatively, it is the timing (time) at which the maximum amplitude is generated in or after the second positive pulse.

Furthermore, the determination that the pulses of the noise have converged is, for example, a case and time when the amplitude (positive amplitude) becomes equal to or less than a predetermined threshold. Since it is important to calculate the delay time td, as long as the timing at which the maximum amplitude is generated in or after the second positive pulse can be accurately measured, an error in measuring the timing at which the pulses converge will have no large influence. The measurement of the timing at which the pulses converge has only to be accurate enough to determine whether the two signals are overlapping pulses or a single pulse.

### <Calculation of Temperature by Noise Pulse Analysis>

As illustrated in FIG. 1, the feature amount analyzing unit 14 performs temperature calculation based on analysis of switching noise pulses generated in the electric power semiconductor elements 105.

The feature amount analyzing unit 14 includes the signal processing unit 110, the first memory unit 108, and the second memory unit 109.

As described above, the signal processing unit 110 receives output signals from the time counting unit 112 in the feature amount detecting unit 13 and performs signal processing.

By this signal processing, the signal processing unit 110 calculates the temperature of the electric power semiconductor elements 105 from changes in the delay values of the noise pulses. Furthermore, from the timing of pulse generation, any of the electric power semiconductor elements 105 (105a to 105f) to which the pulse corresponds is specified.

As described above, since the element temperatures of the electric power semiconductor elements 105 and changes in the element temperatures are calculated from changes in the delay values of the noise pulses generated by the electric power semiconductor elements 105, even a high-speed temperature change can be detected.

The signal processing unit 110 performs signal processing based on predetermined data stored in the second memory unit 109. The data processed by the signal processing unit 110 is sent to the first memory unit 108.

The first memory unit 108 is a primary storage unit until the processing results of the signal processing unit 110 are transferred to the analysis display unit 120.

The second memory unit 109 is for configuration for receiving and storing an algorithm, setting data, and the like necessary for signal processing in the signal processing unit 110 from, for example, the data setting unit 113A, which is an external medium. Specifically, the algorithm of the flowchart in FIG. 7 to be described later, the temperature dependency information on IGBT noise in FIG. 5, the noise generation period tn information in FIG. 6, time-temperature information on pulses, and the like are transferred from the data setting unit 113A to the second memory unit 109 and stored in the second memory unit 109 as necessary.

### <Flowchart from Noise Detection to Analysis>

Next, the noise detection performed by the feature amount detecting unit 13 and analysis performed by the feature amount analyzing unit 14 will be described with reference to a flowchart.

FIG. 7 is a flowchart illustrating a procedure from noise detection to analysis of the electric power semiconductor elements 105 (105a to 105f) in the electric power conversion system S1 according to the first embodiment of the present invention. Steps S700 to S707 in FIG. 7 indicate steps S700 to S707.

### <<Step S700>>

In step S700, before starting measurement, the algorithm of the flowchart in FIG. 7, the temperature dependency information on IGBT noise in FIG. 5, the noise generation period information in FIG. 6, the time-temperature information on pulses, and the like are transferred from the data setting unit 113A to the second memory unit 109 and stored in the second memory unit 109.

### <<Step S701>>

In step S701, when the measurement environment is prepared, the electric power converter 10 is operated to start measurement.

### <<Step S702>>

In step S702, the pulse converting unit 111 generates a pulse wave, using a point at which the amplitude reaches a peak in or after the second positive pulse of the noise signal detected by the noise current detector 119 as a reference (trigger).

### <<Step S703>>

In step S703, the time counting unit 112 measures a time difference td from the turn-off of a control signal (Vc: G105a, for example) to the pulse edge (start point), that is, the rise of a pulse tp.

### <<Step S704>>

In step S704, the signal processing unit 110 determines whether the interval of a plurality of close pulse edges (start points) exceeds a noise generation period (tn).

If the interval exceeds the noise generation period (tn) (Yes), the process proceeds to step S705.

If the interval is smaller than or equal to the noise generation period (tn) (No), the process returns to step S702, and the procedure from step S702 is performed again.

### <<Step S705>>

In step S705, it is determined that there is no influence of other noises, and the temperature is calculated from the delay time. Furthermore, from the timing of pulse generation, any of the electric power semiconductor elements 105 (105a to 105f) to which the pulse corresponds is specified.

Then, the process proceeds to step S706.

### <<Step S706>>

In step S706, it is determined whether the next temperature detection is unnecessary and the temperature detection ends.

The case where the next temperature detection is unnecessary and the temperature detection ends (Yes) is, for example, the case where the electric power converter 10 has stopped operating.

If the next temperature detection is to end (Yes), the process proceeds to step S707.

If the next temperature detection is not to end (No), the process returns to step S702, and the procedure from step S702 is performed again.

### <<Step S707>>

The temperature calculation by the analysis of noise pulses ends (is stopped).

### <Effects of First Embodiment>

According to the first embodiment of the present invention, the element temperatures of the semiconductor devices (IGBTs) 105 (105a to 105f) constituting the inverter unit (inverter 122) of the electric power converter 10 in the electric power conversion system S1 can be achieved with a simple and inexpensive configuration.

Furthermore, it is possible to identify which of the electric power semiconductor elements 105 (105a to 105f) to which a pulse corresponds from the generation timing of the pulse.

Furthermore, since the element temperatures of the electric power semiconductor elements 105 and changes in the element temperatures are calculated from the changes in the delay values of the noise pulses generated by the electric power semiconductor elements 105, even a high-speed temperature change can be detected.

### <<Second Embodiment>>

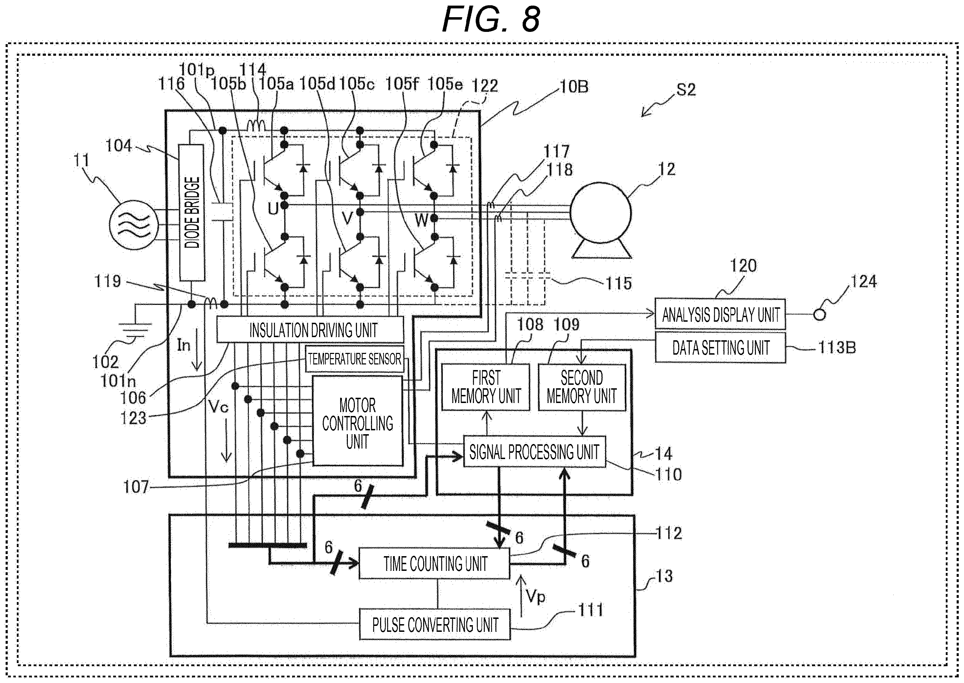

FIG. 8 is a block diagram for explaining an electric power conversion system S2 related to a diagnostic circuit for an electric power converter according to a second embodiment of the present invention.

In FIG. 8 illustrating the second embodiment, a difference from FIG. 1 of the first embodiment is that a temperature sensor 123 is provided inside an electric power converter 10B. A temperature information signal of the temperature sensor 123 is input to the signal processing unit 110.

Another difference is that, between the feature amount detecting unit 13 and the feature amount analyzing unit 14, the six signals of the motor controlling unit 107, which are input to the feature amount detecting unit 13, are input to the signal processing unit 110 in the feature amount analyzing unit 14.

Another difference is that, between the feature amount detecting unit 13 and the feature amount analyzing unit 14, six control lines (signal lines) are added from the signal processing unit 110 in the feature amount analyzing unit 14 to the time counting unit 112 in the feature amount detecting unit 13. The six control lines (signal lines) include information on six signals of the motor controlling unit 107 described above.

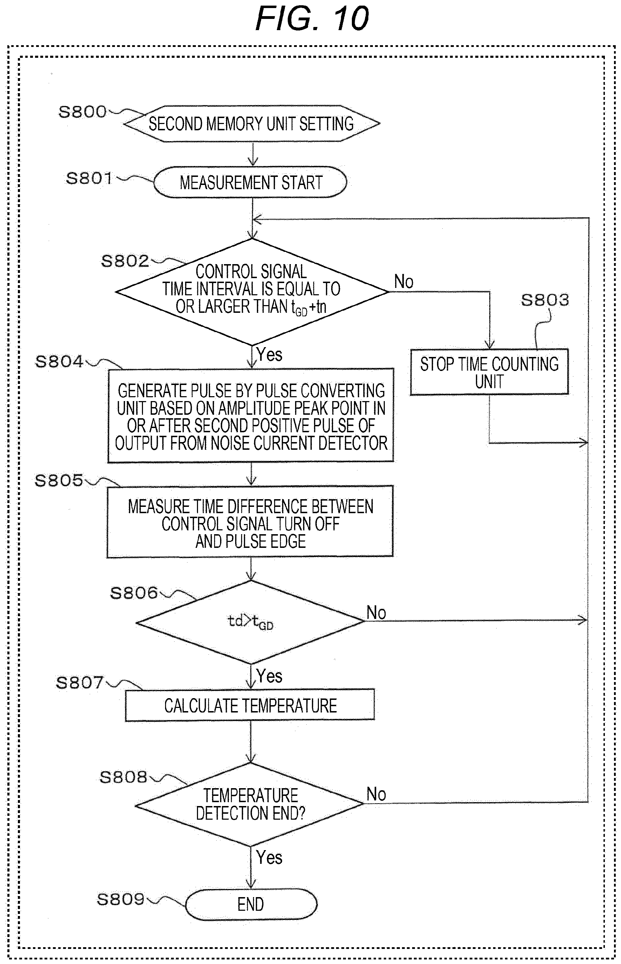

Another difference is that the information content of the data setting unit 113B is changed and added. The data setting unit 113B has predetermined data necessary for the feature amount analyzing unit 14 to perform predetermined processing and analysis. The predetermined data includes, for example, the algorithm of a flowchart in FIG. 10 and a determination formula described later, the temperature dependency of a delay time t_{IGBT} of IGBT noise, the temperature dependency of a delay time t_{GD} of the insulation driving circuit, noise generation period tn, time-temperature information on pulse s, and the like.

The configuration in FIG. 8 other than the differences described above is substantially the same as the configuration illustrated in FIG. 1, and a redundant detailed description will be omitted.

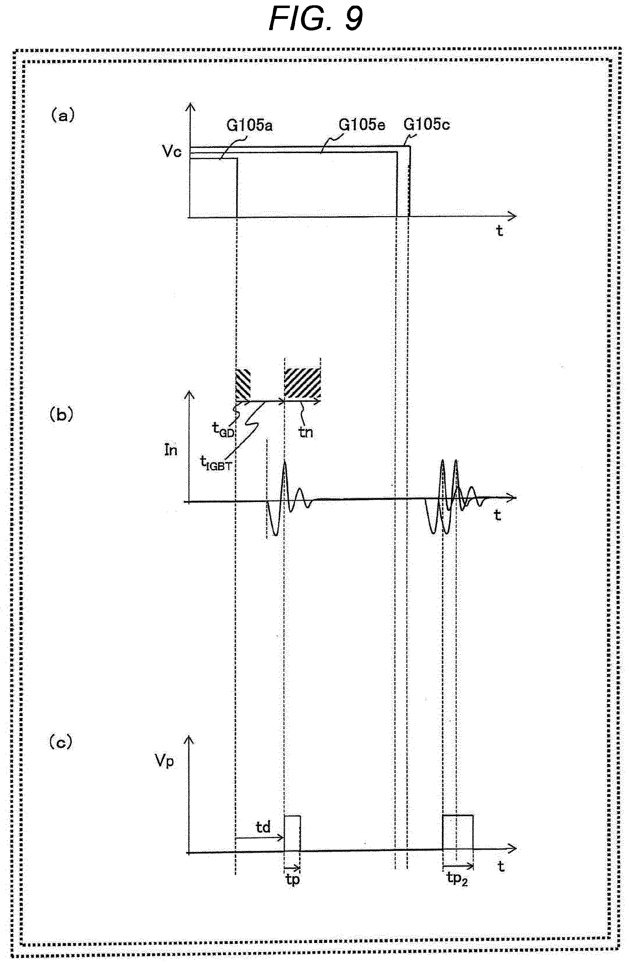

FIG. 9 is a diagram illustrating control signals, noise current waveforms, and output signal waveforms related to the electric power semiconductor elements 105 constituting the electric power converter 10B according to the second embodiment of the present invention, (a) being an enlarged view of turn-off portions of control signals (Vc), (b) being a waveform diagram of the noise currents (In) detected by the noise current detector 119, and (c) being a waveform diagram of the output signals (Vp) of the pulse converting unit 111.

In FIGS. 9(a), (b) and (c), the horizontal axis represents time (transition of time), and the vertical axes respectively represents control signal (Vc) voltage, noise current In, and output signal voltage Vp.

When the electric power conversion system S2 illustrated in FIG. 8 is used in an environment with a large temperature change, a temperature detection method is required in consideration of the delay of the output signal of the insulation driving unit 106. Therefore, as described above, the temperature sensor 123 is provided inside the electric power converter 10.

The temperature sensor 123 measures the temperature of the insulation driving unit 106. Since the inverter 122 of the electric power converter 10 is used under high voltage, it is difficult to install a thermometer in the inverter 122. However, since the insulation driving unit 106 is used at a relatively low voltage, it is practically possible to include the temperature sensor 123 in the insulation driving unit 106. By providing the insulation driving unit 106 with the temperature sensor 123, the temperature change with the delay of the insulation driving unit 106 is also taken into consideration, so that the accuracy can be enhanced in the calculation of the temperature change in the inverter 122.

The temperature dependency of the delay time t_{GD} of the insulation driving unit 106 and the noise generation period tn are evaluated in advance and made into data. Since the temperature of the insulation driving unit 106 does not instantaneously change significantly, the value of the temperature detected by the temperature sensor 123 is used as one that does not fluctuate instantaneously. The delay time t_{GD} is obtained as a delay time in the insulation driving unit 106 corresponding to the detected temperature.

Furthermore, as in the case with FIG. 6, the noise generation period tn of the switching noise is evaluated in advance.

Then, a determination time value (t_{GD} + tn) is obtained from the delay time t_{GD} by the insulation driving unit 106 measured by the temperature sensor 123 described above and the noise generation period tn.

The temperature dependency of the delay time t_{GD} of the insulation driving unit 106 and the noise generation period tn are stored in the second memory unit 109, and the signal processing unit 110 can refer to these pieces of data.

Furthermore, as illustrated in FIG. 8, a signal of temperature information on the insulation driving unit 106 from the temperature sensor 123 is input to the signal processing unit 110. Furthermore, control signals G105a to 105f for the electric power semiconductor elements 105 are input to the signal processing unit 110 from the motor controlling unit 107. Therefore, the signal processing unit 110 can process signals with reference to the above-described pieces of data and control signals.

Furthermore, as illustrated in FIG. 8, since the time counting unit 112 receives the six signals from the signal processing unit 110, the information on the signal processing unit 110 can be used.

Returning to FIG. 9, a description will be continued. As illustrated in FIG. 9(a), when the edge interval of the control signals for the electric power semiconductor elements 105e and 105c (interval between the fall of G105e and the fall of G105c) is smaller than the determination time value (t_{GD} + tn), noises generated in the respective electric power semiconductor elements (105e, 105c) overlap. Therefore, the measurement error becomes large, and the temperature detection accuracy is lowered.

In such a case, the signal processing unit 110 in FIG. 8 stops the corresponding counting of the time counting unit 112.

When the edge interval of the control signals (the interval between the fall of G105a and the fall of G105e) exceeds the determination time value (t_{GD} + tn), the time counting unit 112 acquires time measurement result (time interval, edge interval) td between the edge of the control signal and the edge of the pulse generated by the pulse converting unit 111 for the electric power semiconductor element 105a. Then, the time counting unit 112 sends the time measurement result td, as a result that is possibly useful, to the signal processing unit 110.

The signal processing unit 110 first determines whether the obtained result is valid.

Specifically, when td ≤ t_{GD}, the temperature is not calculated because the detection accuracy of a delay time t_{IGBT} with an IGBT may decrease due to the possibility of being affected by other switching noise.

When td > t_{GD}, the delay time t_{IGBT} with the IGBT can be obtained by (td-t_{GD}). The element temperature of the IGBT (electric power semiconductor element) is calculated from a relational expression between the determined delay time t_{IGBT} and the temperature dependency of the IGBT switching noise stored in advance in the second memory unit, or data.

The signal processing unit 110 sends information on the calculated element temperature of the IGBT (electric power semiconductor element) to the first memory unit 108.

In FIG. 9, as in the case with FIG. 6, if the pulse converting unit 111 (FIG. 8) generates a pulse triggered by a peak part that takes the largest value, among noises input from the noise current detector 119, in or after the second positive pulse, high detection accuracy can be expected.

Furthermore, in FIG. 9, as in the case with FIG. 6, the noise generation period tn is a time from the time of the reference of pulse generation (the second positive peak point) until the noise pulses converge.

Furthermore, it is desirable that the pulse width tp (FIG. 9(c)) of the pulse generated by the pulse converting unit 111 (FIG. 8) be shorter than the noise generation period tn (FIG. 9(b)).

In addition, it is desirable that the reference of the determination formula using the interval between control signals in the time counting unit 112 (FIG. 8) be not t_{GD} + tn, but td + tn. However, in order to make a determination before td counting, it is determined by t_{GD} + tn in the determination formula.

### <Flowchart from Noise Detection to Analysis in Second Embodiment>

Next, the noise detection performed by the feature amount detecting unit 13 and analysis performed by the feature amount analyzing unit 14 in the second embodiment will be described with reference to a flowchart.

FIG. 10 is a flowchart illustrating a procedure from noise detection to analysis of the electric power semiconductor elements 105 (105a to 105f) in the electric power conversion system S2 according to the second embodiment of the present invention. Steps S800 to S809 in FIG. 10 indicate steps S800 to S809.

### <<Step S800>>

In step S800, before starting measurement, the algorithm of the flowchart in FIG. 10, the temperature dependency information on IGBT noise in FIG. 8, the noise generation period information, the time-temperature information on pulses, and the like are transferred from the data setting unit 113B to the second memory unit 109 and stored in the second memory unit 109.

### <<Step S801>>

In step S801, when the measurement environment is prepared, the electric power converter 10B is operated to start measurement.

### <<Step S802>>

In step S802, the signal processing unit (digital signal processing unit) 110 determines whether the edge interval between two control signals Vc is equal to or larger than (t_{GD} + tn) . The control signals Vc are any of the control signals G105a to G105f.

If the edge interval between the two (plurality of) control signals Vc is equal to or larger than (t_{GD} + tn) (Yes), the process proceeds to step S804.

If the edge interval between the two control signals Vc is smaller than (t_{GD} + tn) (No), the process moves to step S803.

### <<Step S803>>

In step S803, the edge interval between the two (plurality of) control signals Vc is smaller than (t_{GD} + tn). This means that the two (plural of) control signals Vc overlap in the measurement range and accurate determination cannot be made, whereby the time counting unit 112 is stopped.

Then, the process returns to step S802 to measure the next pulse. Alternatively, the process waits for the next control signal.

### <<Step S804>>

In step S804, the pulse converting unit 111 generates a pulse wave, using a point at which the amplitude reaches a peak in or after the second positive pulse from the output signal of the noise current detector 119 as a reference (trigger) .

Then, the process proceeds to step S805.

### <<Step S805>>

In step S805, the time interval (edge interval) td between the turn-off of the control signal and the pulse edge of the control signal is measured.

Then, the process proceeds to step S806.

### <<Step S806>>

In step S806, the signal processing unit 110 compares the delay time td corresponding to the edge interval of the control signal (G105a) and the pulse signal with the delay time t_{GD} of the insulation driving unit 106 measured by the temperature sensor 123.

If td > t_{GD} (Yes), the process proceeds to step S807.

If td ≤ t_{GD} (No) , the process returns to step S802. Then, the next pulse is measured. Alternatively, the process waits for the next control signal.

### <<Step S807>>

In step S807, the element temperature of the IGBT (electric power semiconductor element) corresponding to the delay time of (td-t_{GD}) is converted and calculated.

The reason for subtracting the delay time t_{GD} of the insulation driving unit 106 measured by the temperature sensor 123 as in (td-t_{GD}) is to correct the delay due to the insulation driving unit 106.

Then, the process proceeds to step S808.

### <<Step S808>>

In step S808, it is determined whether temperature detection should be ended. The state where the temperature detection should be ended (Yes) is, for example, a state where the electric power converter 10B has stopped operating. The state where the temperature detection should not be ended (No) is, for example, a case where the electric power converter 10B is in operation.

In the state where the temperature detection should be ended (Yes), the process proceeds to step S809.

In the state where the temperature detection should not be ended (No), the process returns to step S802 to measure the next pulse. Alternatively, the process waits for the next control signal.

### <Test Results of electric power Cycle Test>

Next, test results when an electric power cycle test was performed to cause the electric power semiconductor elements 105 of the electric power converter 10B to experience a temperature rise and return to the original temperature will be described.

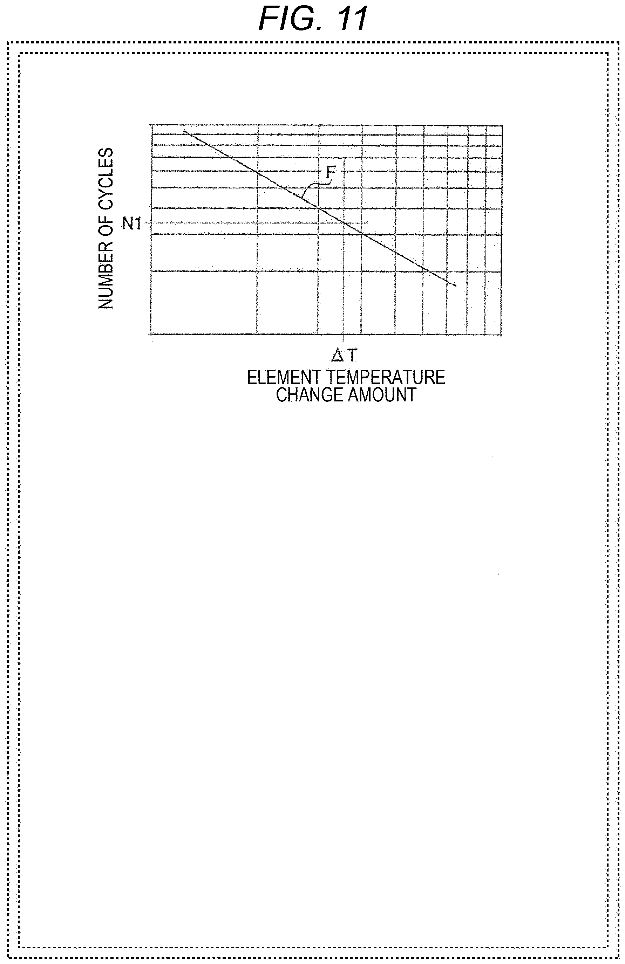

FIG. 11 is a diagram illustrating test results of the electric power cycle test of the electric power converter 10B according to the second embodiment of the present invention.

In FIG. 11, the horizontal axis represents the change amount ΔT of the element temperature, and the vertical axis represents the number of cycles (number of electric power cycles) N1. Both the horizontal and vertical axes are log scales.

An operation of causing the electric power semiconductor element 105 to "experience a certain temperature rise ΔT and return to the original temperature" is referred to as "one cycle", and it is assumed that the electric power semiconductor element 105 is broken when the operation is performed for N1 cycles.

Assuming that the element temperature before the temperature rise is T01 and the element temperature after the temperature rise is T02, the temperature rise (change amount) ΔT is equal to "T02-T01". The measurement of the cycle number N1 with respect to various temperature rises ΔT is referred to as "electric power cycle test", and the characteristic F illustrated in FIG. 11 represents the results of the test.

Here, it is assumed that stress S on the electric power semiconductor element 105a when a certain temperature rise ΔT occurs once is "S = 1/N1". Assuming that the time for holding the element temperature T02 is th seconds, the life LF of the electric power semiconductor element 105a can be predicted to be "LF = th/S" seconds.

The remaining life can be predicted by subtracting the already consumed life from the predicted remaining life of the electric power semiconductor element 105a when it is new.

The analysis display unit 120 in FIG. 8 stores the characteristic F illustrated in FIG. 11 and predicts the stress S and the life LF based on the characteristic F. Then, the analysis display unit 120 predicts the remaining life of the electric power semiconductor element 105 based on the prediction result.

### <Effects of Second Embodiment>

According to the second embodiment of the present invention, the element temperatures of the semiconductor devices (IGBTs) 105 (105a to 105f) constituting the inverter unit (inverter 122) of the electric power converter 10B in the electric power conversion system S2 can be achieved with a simple and inexpensive configuration.

Furthermore, it is possible to identify which of the electric power semiconductor elements 105 (105a to 105f) to which a pulse corresponds from the generation timing of the pulse.

Furthermore, the element temperature T of the electric power semiconductor element 105 or the element temperature change amount ΔT can be obtained with high accuracy. Furthermore, since the element temperatures and changes in the element temperatures are calculated from the changes in the delay values of the noise pulses generated by the electric power semiconductor elements 105, even a high-speed temperature change can be detected.

Furthermore, the remaining life of the electric power semiconductor elements 105 can be predicted with high accuracy.

### <<Third Embodiment>>

A diagnostic circuit for an electric power converter according to a third embodiment of the present invention will be described.

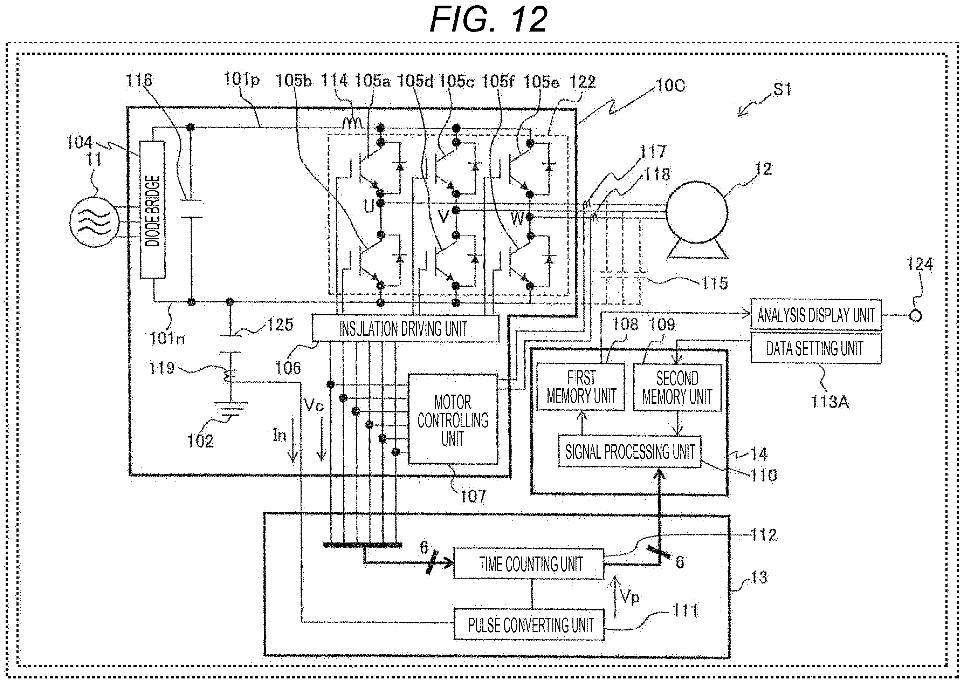

FIG. 12 is a block diagram for explaining an electric power conversion system S1 related to the diagnostic circuit for the electric power converter according to the third embodiment of the present invention.

FIG. 12 differs from FIG. 1 in that an electric power converter 10C includes a capacitor 125 and the noise current detector 119 is installed at a different position.

The configuration other than those described above is substantially the same as the configuration illustrated in FIG. 1, and a redundant description will be omitted.

In FIG. 12, the capacitor 125 is connected between the DC power supply line 101n for negative polarity and a ground 102. The capacitor 125 serves as a noise removal filter, and the terminal on the ground 102 side of the capacitor 125 includes noise when the electric power converter 10C is in operation.

The noise current detector 119 is provided at the terminal of the capacitor 125 on the ground 102 side.

The noise current detector 119 detects noise current when the electric power converter 10 is in operation, and sends it to the pulse converting unit 111. Thereafter, by the same operation as in the first embodiment illustrated in FIG. 1, the element temperature T of the electric power semiconductor elements 105 (105a to 105f) in the electric power converter 10 or the element temperature change amount ΔT can be determined from delay times of the pulse included in the noise current.

### <Effects of Third Embodiment>

In FIG. 12, the noise current detector 119 is connected to the inverter 122 via the capacitor 125. The noise current detector 119 detects current in the ground line. Therefore, the noise current detector 119 is isolated from the high voltage of the inverter 122, resulting in an advantage in that inexpensive performance specifications such as withstand voltage can be used. Furthermore, the capacitor 125 has an effect of reducing noise current.

### «Fourth Embodiment>>

A diagnostic circuit for an electric power converter according to a fourth embodiment of the present invention will be described.

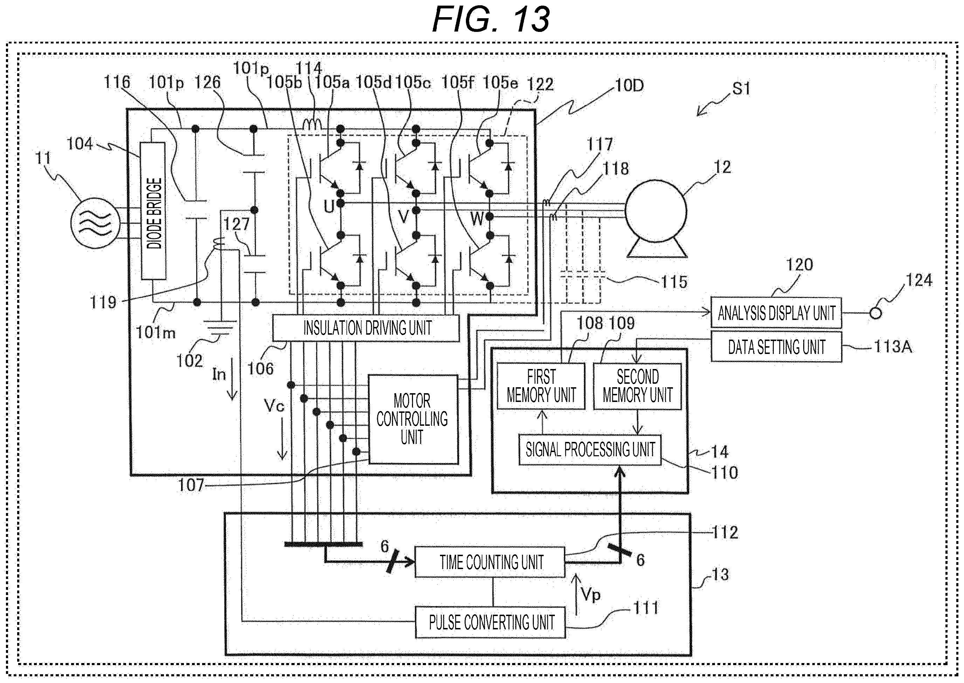

FIG. 13 is a block diagram for explaining an electric power conversion system S1 related to the diagnostic circuit for the electric power converter according to the fourth embodiment of the present invention.

FIG. 13 differs from FIG. 1 in that an electric power converter 10D includes a capacitor 126 (first capacitor) and a capacitor 127 (second capacitor) and the noise current detector 119 is installed at a different position.

The configuration other than those described above is substantially the same as the configuration illustrated in FIG. 1, and a redundant description will be omitted.

In FIG. 13, the capacitor 126 and the capacitor 127 are connected in series. A first terminal of the capacitor 126 is connected to the DC power supply line 101p for positive polarity, and a second terminal of the capacitor 127 is connected to the DC power supply line 101n for negative polarity. A second terminal of the capacitor 126 and a first terminal of the capacitor 127 are both connected to the ground 102. The capacitor 126 and the capacitor 127 function as noise removal filters.

The noise current detector 119 is provided to detect a current from the wiring between the connection point between the second terminal of the capacitor 126 and the first terminal of the capacitor 127 and the ground 102. The wiring between the connection point between the second terminal of the capacitor 126 and the first terminal of the capacitor 127 and the ground 102 includes noise when the electric power converter 10D is in operation.

The noise current is detected by the noise current detector 119 and sent to the pulse converting unit 111. Thereafter, by the same operation as in the first embodiment illustrated in FIG. 1, the element temperature T of the electric power semiconductor elements 105 (105a to 105f) in the electric power converter 10 or the element temperature change amount ΔT can be determined from delay times of the pulse included in the noise current.

### <Effects of Fourth Embodiment>

In FIG. 13, the noise current detector 119 is connected to the inverter 122 via the capacitor 126 and the capacitor 127. The noise current detector 119 detects current in the ground line. Therefore, the noise current detector 119 is isolated from the high voltage of the inverter 122, resulting in an advantage in that inexpensive performance specifications such as withstand voltage can be used. Furthermore, the capacitor 126 and the capacitor 127 have an effect of reducing noise current.

### <<Fifth Embodiment>>

A diagnostic circuit for an electric power converter according to a fifth embodiment of the present invention will be described.

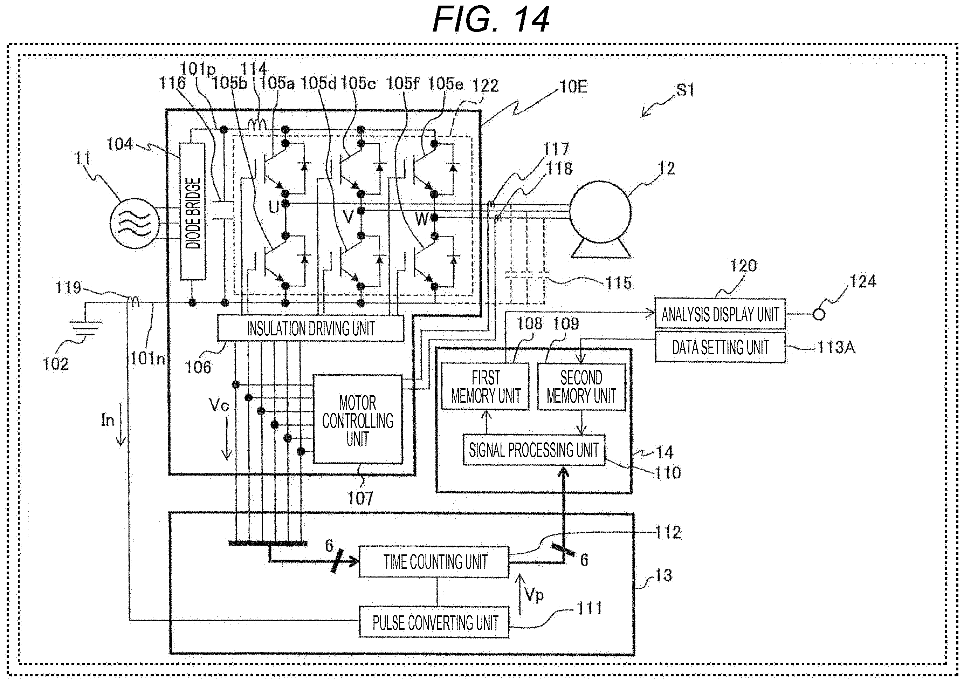

FIG. 14 is a block diagram for explaining an electric power conversion system S1 related to the diagnostic circuit for the electric power converter according to the fifth embodiment of the present invention.

FIG. 14 differs from FIG. 1 in that the noise current detector 119 is provided separately from an electric power converter 10E. The noise current detector 119 is provided on the wiring where the DC power supply line 101n for negative polarity of the inverter 122 in the electric power converter 10E is grounded to the ground 102.

While the noise current detector 119 is provided between the DC power supply line for negative polarity of the diode bridge 104 and the DC power supply line for negative polarity of the smoothing capacitor 116 in FIG. 1, the noise current detector 119 is provided between the DC power supply line for negative polarity of the diode bridge 104 and the ground 102 in FIG. 14.

In the case with the configuration illustrated in FIG. 1, the inverter 122 is driven by the electric power (current) charged in the smoothing capacitor 116, but the current flowing to the three-phase motor 12 becomes large. If the charging current of the smoothing capacitor 116 is insufficient, charge and discharge currents are exchanged between the diode bridge 104 and the smoothing capacitor 116. In this process, an offset due to the charge and discharge currents is added to the switching current. Since this offset current differs depending on the current flowing through the three-phase motor 12, the amplitude range of the current detected by the noise current detector 119 is broadened. As a result, the conversion accuracy from noise to pulses in the pulse converting unit 111 is degraded.

In contrast, in the configuration illustrated in FIG. 14 according to the fifth embodiment, as described above, the noise current detector 119 is provided on the wiring where the DC power supply line 101n for negative polarity of the inverter 122 is grounded to the ground 102. Because of this configuration, no offset current is generated in the current through the ground line due to the magnitude of the current driving the three-phase motor 12. That is, since the noise current detector 119 is not affected by the offset current described above, it can accurately capture noise pulses and enable stable temperature detection.

The configuration in FIG. 14 other than those described above is substantially the same as the configuration illustrated in FIG. 1, and a redundant description will be omitted.

### <Effects of Fifth Embodiment>

As described above, according to the fifth embodiment, since the noise current detector 119 is not affected by the offset current due to the magnitude of the current driving the three-phase motor 12, noise pulses can be accurately captured and stable element temperature detection can be achieved.

### <<Sixth Embodiment>>

A diagnostic circuit for an electric power converter according to a sixth embodiment of the present invention will be described.

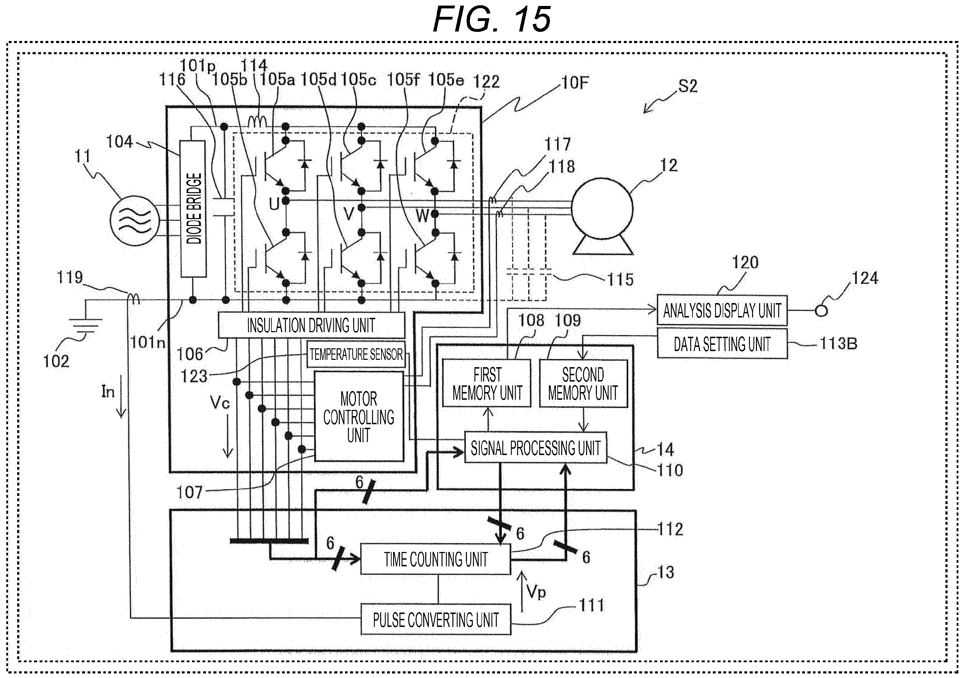

FIG. 15 is a block diagram for explaining an electric power conversion system S1 related to the diagnostic circuit for the electric power converter according to the sixth embodiment of the present invention.

FIG. 15 differs from FIG. 8 illustrating the second embodiment in that the noise current detector 119 is provided separately from an electric power converter 10F. The noise current detector 119 is provided on the wiring where the DC power supply line 101n for negative polarity of the inverter 122 in the electric power converter 10F is grounded to the ground 102.

While the noise current detector 119 is provided between the DC power supply line for negative polarity of the diode bridge 104 and the DC power supply line for negative polarity of the smoothing capacitor 116 in FIG. 8, the noise current detector 119 is provided between the DC power supply line for negative polarity of the diode bridge 104 and the ground 102 in FIG. 15.

In the case with the configuration illustrated in FIG. 8, as in the case with the configuration illustrated in FIG. 1, the inverter 122 is driven by the electric power (current) charged in the smoothing capacitor 116, but the current flowing to the three-phase motor 12 becomes large. If the charging current of the smoothing capacitor 116 is insufficient, charge and discharge currents are exchanged between the diode bridge 104 and the smoothing capacitor 116. In this process, an offset due to the charge and discharge currents is added to the switching current. Since this offset current differs depending on the current flowing through the three-phase motor 12, the amplitude range of the current detected by the noise current detector 119 is broadened. As a result, the conversion accuracy from noise to pulses in the pulse converting unit 111 is degraded.

In contrast, in the configuration illustrated in FIG. 15 according to the sixth embodiment, as described above, the noise current detector 119 is provided on the wiring where the DC power supply line 101n for negative polarity of the inverter 122 is grounded to the ground 102. Because of this configuration, no offset current is generated in the current through the ground line due to the magnitude of the current driving the three-phase motor 12. That is, since the noise current detector 119 is not affected by the offset current described above, it can accurately capture noise pulses and enable stable element temperature detection.

The configuration in FIG. 15 other than those described above is substantially the same as the configuration illustrated in FIG. 8, and a redundant description will be omitted.

### <Effects of Sixth Embodiment>

As described above, according to the sixth embodiment, since the noise current detector 119 is not affected by the offset current due to the magnitude of the current driving the three-phase motor 12, noise pulses can be accurately captured and stable element temperature detection can be achieved.

### <<Seventh Embodiment>>

A diagnostic system for an electric power converter according to a seventh embodiment of the present invention will be described.

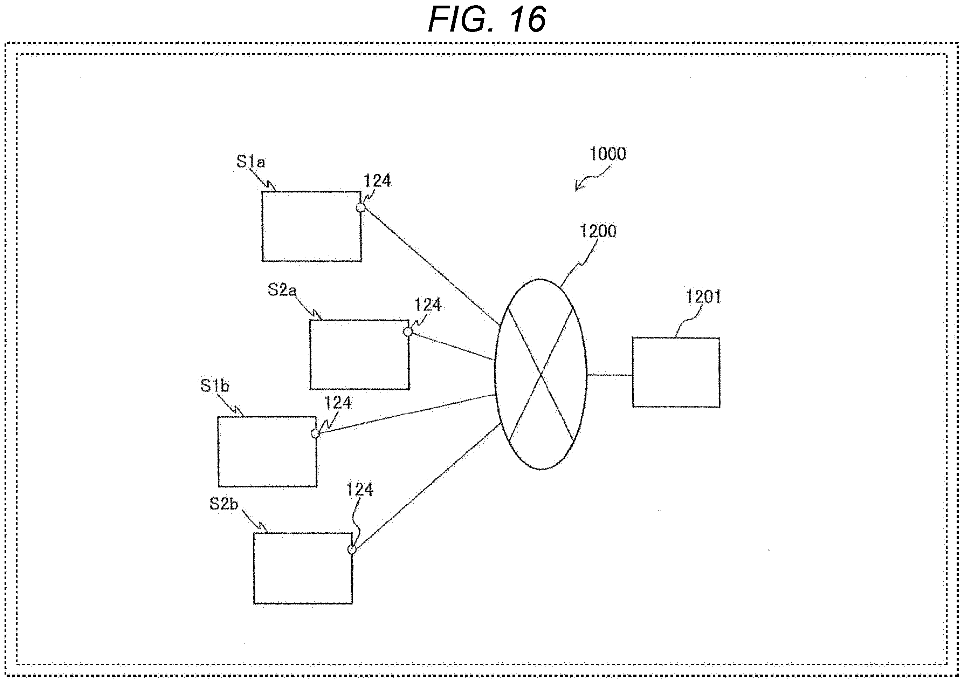

FIG. 16 is a diagram for explaining a diagnostic system 1000 for the electric power converter according to the seventh embodiment of the present invention.

In FIG. 16, electric power conversion systems S1a and S1b having the functional configuration of the electric power conversion system S1 described above and electric power conversion systems S2a and S2b having the functional configuration of the electric power conversion system S2 are connected to a communication network 1200 via respective external terminals 124.

A server 1201 is connected to the communication network 1200, and this single server 1201 monitors a plurality of electric power converters (10: FIG. 1, 10B: FIG. 8) in the electric power conversion systems S1a, S1b, S2a, and S2b.

With the above-described configuration, the single server 1201 monitors the plurality of electric power converters, whereby element temperature detection, life diagnosis, operation control, and the like on the electric power converters are performed.

The server 1201 can be replaced with a personal computer.

### <Effects of Seventh Embodiment>

The single server 1201 monitors the plurality of electric power converters, whereby element temperature detection, life diagnosis, operation control, and the like on the electric power converters can be performed.

### <<Other Embodiments>>

The present invention is not limited to the embodiments described above, and further includes various modifications. For example, the above-described embodiments have been described in detail in order to explain the present invention in an easy-to-understand manner, and are not necessarily limited to those including all the described configurations. In addition, it is possible to replace part of the configuration of one embodiment with part of the configuration of another embodiment, and further add, delete, or replace part or all of the configuration of one embodiment to/from/with the configuration of another embodiment.

Other embodiments and modifications will be further described below.

### <<Pulse Detection>>

In FIG. 6 related to the first embodiment, although it has been described that the second positive pulse is detected, the third or subsequent pulse having positive polarity may be detected. Furthermore, in a detector that detects the magnitude of a pulse, the threshold to be detected may be set to a predetermined value (magnitude) and the determination may be made based on the magnitude of the pulse.

Alternatively, not a positive pulse (having positive polarity) but a negative pulse (having negative polarity) may be detected.

### <<Method of Detecting Second Positive Pulse>>

In the first embodiment, it has been described that the detection of the second positive pulse or the pulses after the second positive pulse is performed by the feature amount detecting unit 13. However, this detection is not limited to detection by the feature amount detecting unit 13.

The feature amount detecting unit 13 simply detects a pulse and performs time counting. Then, in the signal processing and analysis processing of the feature amount analyzing unit 14, in particular, the signal processing unit 110, what number among the positive pulses is determined. Then, the feature amount analyzing unit 14 may further perform analysis processing based on this information and the control signals for the electric power semiconductor elements 105 to calculate the delay times and the element temperatures of the electric power semiconductor elements 105.

Note that there is also a method of referring to the control signals for the electric power semiconductor elements 105 in the analysis processing of the feature amount analyzing unit 14 in determining what number among the positive pulses.

### <<Function of Predicting Remaining Life>>

In the second embodiment, the characteristic F illustrated in FIG. 11 is stored in the analysis display unit 120 in FIG. 8, and the stress S and the life LF are predicted based on the characteristic F. A method of predicting the remaining life of the electric power semiconductor elements 105 based on the prediction result has been described.

However, providing the analysis display unit 120 with the function of predicting the remaining life is not limited to the second embodiment in FIG. 8.

The analysis display unit 120 in FIG. 1 of the first embodiment can also have the function of predicting the remaining life. When the analysis display unit 120 in FIG. 1 is provided with the function of predicting the remaining life, the element temperature T can be determined with high accuracy also in the first embodiment, whereby the remaining life of the electric power semiconductor element 105 can be predicted with high accuracy.

### <<Switching Element>>

In the first embodiment, the switching element constituting the inverter 122 is described as an IGBT, but the invention is not limited to the IGBT. For example, a MOSFET or a super junction MOSFET may be used.

### <<AC electric power Supply>>

In the first embodiment, although the three-phase AC power supply 11 is described as an AC electric power supply, it is not limited to three-phase AC power supplies. It may be a single-phase AC electric power supply. Also, an AC electric power supply of four or more phases may be used.

### <<electric power Supply>>

In the first embodiment, although the AC voltage (electric power) of the three-phase AC power supply 11 is converted to a DC voltage (electric power) by the diode bridge 104 and the smoothing capacitor 116 to serve as a DC power supply of the inverter 122, this method is not limiting.

That is, a method of providing a DC power supply and supplying a DC voltage (electric power) from this DC power supply to the inverter 122 may be used.

### <<AC Motor>>

In the first embodiment, although the case where the output from the inverter 122 is a three-phase AC to drive the three-phase motor 12 has been described, the motor is not limited to three phases. For example, it is possible to apply the present invention to a single-phase motor.

### <<Noise Current Detector>>

In FIG. 1 illustrating the first embodiment, although the noise current detector 119 is provided on the DC power supply line 101n for negative polarity, it may be provided on the DC power supply line 101p for positive polarity.

### Reference Signs List

10, 10B, 10C, 10D, 10E, 10F electric power converter
11 three-phase AC power supply (AC electric power)
12 three-phase motor
13 feature amount detecting unit
14 feature amount analyzing unit
101p DC power supply line for positive polarity
101n DC power supply line for negative polarity
102 ground (earth)
104 diode bridge (AC-DC converter circuit)
105, 105a to 105f electric power semiconductor element
(power semiconductor element, IGBT, semiconductor module)
106 insulation driving unit (insulation driving circuit,
driving circuit)
107 motor controlling unit
108 first memory unit (relation storage unit)
109 second memory unit (relation storage unit)
110 signal processing unit
111 pulse converting unit
112 time counting unit
113A, 113B data setting unit
114 parasitic inductance
115 parasitic capacitance
116 smoothing capacitor
117, 118 phase current detector
119 noise current detector (noise current detecting unit)
120 analysis display unit
122 inverter, inverter unit
123 temperature sensor
125, 126, 127 capacitor
124 output terminal
200 electric power semiconductor circuit
201 IGBT
202 diode, antiparallel diode
301 cooler
302 grease
303 base board
304, 306 metal
305 insulating layer
307 insulating substrate
308, 310 solder
309 semiconductor element unit
1000 diagnostic system for electric power converter
1200 network
1201 server machine
S1, S2, S1a, S1b, S2a, S2b electric power conversion system

## Claims

1. A diagnostic circuit for an electric power converter comprising:
a noise current detecting unit configured to detect a noise component superimposed on a DC power supply line of an electric power converter including a plurality of electric power semiconductor elements and configured to convert AC electric power or DC electric power into AC electric power having a variable frequency and a variable voltage;
a pulse converting unit configured to convert the noise component detected by the noise current detecting unit into a pulse wave; and
a time counting unit configured to measure a time difference between a plurality of the pulse waves and a time difference between input control signals for the electric power semiconductor elements and the pulse waves,
wherein the pulse converting unit generates pulse waves at a timing generated by pulses of the noise component.

2. The diagnostic circuit for an electric power converter according to claim 1, wherein
the timing at which the pulse converting unit captures the pulses of the noise component is a timing at which a maximum amplitude is generated in or after a second positive pulse of the noise component.

3. The diagnostic circuit for an electric power converter according to claim 2, comprising:
a relation storage unit configured to store a relation between the time difference between the input control signals for the electric power semiconductor elements and the pulse waves and element temperatures of the electric power semiconductor elements; and
a signal processing unit configured to estimate the element temperatures based on the time difference between the control signals and the pulse waves and storage content stored in the relation storage unit.

4. The diagnostic circuit for an electric power converter according to claim 1, comprising:
a relation storage unit configured to store a relation between the time difference between the input control signals for the electric power semiconductor elements and the pulse waves and element temperatures of the electric power semiconductor elements; and
a signal processing unit configured to estimate the element temperatures based on the time difference between the control signals and the pulse waves and storage content stored in the relation storage unit,
wherein the signal processing unit performs, based on the pulse waves of the pulse converting unit and the control signals for the electric power semiconductor elements, detection processing on a timing at which a maximum amplitude is generated in or after a second positive pulse of the noise component.

5. A diagnostic circuit for an electric power converter comprising:
a noise current detecting unit configured to detect a noise component superimposed on a DC power supply line of an electric power converter including a plurality of electric power semiconductor elements and configured to convert AC electric power or DC electric power into AC electric power having a variable frequency and a variable voltage;
a pulse converting unit configured to convert the noise component detected by the noise current detecting unit into a pulse wave; and
a time counting unit configured to measure a time difference between a plurality of the pulse waves and a time difference between input control signals for the electric power semiconductor elements and the pulse waves;
a relation storage unit configured to store a relation between the time difference between the input control signals for the electric power semiconductor elements and the pulse waves and element temperatures of the electric power semiconductor elements; and
a signal processing unit configured to estimate the element temperatures based on the time difference between the control signals and the pulse waves and storage content stored in the relation storage unit,
wherein the time counting unit measures the time difference between the plurality of pulse waves when an interval between the control signals for the electric power semiconductor elements exceeds a sum of a delay time of a driving circuit driving the electric power semiconductor elements and a generation period of the noise component, and
when a measurement result of the time counting unit is larger than the delay time of the driving circuit, the signal processing unit calculates the element temperature of the corresponding electric power semiconductor element based on the time difference and the storage content stored in the relation storage unit.

6. The diagnostic circuit for an electric power converter according to claim 5, wherein
the pulse converting unit generates pulses at a timing at which a maximum amplitude is generated in or after a second pulse of the noise component.

7. The diagnostic circuit for an electric power converter according to claim 5, comprising
a temperature sensor configured to measure a temperature of the driving circuit.

8. The diagnostic circuit for an electric power converter according to any one of claims 3 to 7, comprising
an analysis display unit configured to analyze and display a processing result of the signal processing unit,
wherein the relation storage unit includes a first memory unit configured to temporarily store the processing result of the signal processing unit until the processing result is transferred to the analysis display unit, and a second memory unit configured to receive and store an algorithm and characteristic data necessary for the signal processing unit to perform signal processing, from a data setting unit.

9. The diagnostic circuit for an electric power converter according to claim 8, wherein
the analysis display unit has a function of predicting life of the plurality of electric power semiconductor elements in real time based on information on the element temperatures of the electric power semiconductor elements output from the signal processing unit.

10. The diagnostic circuit for an electric power converter according to claim 1, wherein
the noise current detecting unit is provided on a DC power supply line of the electric power converter.

11. The diagnostic circuit for an electric power converter according to claim 1, comprising
a capacitor between a DC power supply line of the electric power converter and a ground,
wherein the noise current detecting unit is provided at a terminal of the capacitor.

12. The diagnostic circuit for an electric power converter according to claim 1, comprising
a first capacitor and a second capacitor connected in series between a DC power supply line for positive polarity and a DC power supply line for negative polarity of the electric power converter,
wherein the noise current detecting unit is provided on wiring connecting a connection point between the first capacitor and the second capacitor and a ground.

13. The diagnostic circuit for an electric power converter according to claim 1, wherein
the noise current detecting unit is provided on a ground line of the electric power converter.

14. The diagnostic circuit for an electric power converter according to claim 1, wherein
the electric power converter includes a diode bridge and a smoothing capacitor configured to rectify and smooth an AC voltage to a DC voltage, and an inverter configured to convert a DC voltage into an AC voltage having a variable frequency.

15. The diagnostic circuit for an electric power converter according to claim 1, wherein
the electric power converter outputs three-phase AC electric power and drives a three-phase AC motor.

16. A diagnostic system for an electric power converter comprising
a plurality of electric power conversion systems including the diagnostic circuit for an electric power converter according to claim 9, the electric power conversion systems being connected to a network,
wherein a personal computer or a server connected to the network performs temperature monitoring and life diagnosis on a plurality of the electric power converters.
